# NEUE EUROPÄISCHE PATENTSCHRIFT

(11) **EP 0 132 528 B2**
(45) Veröffentlichungstag und Bekanntmachung des Hinweises auf die Entscheidung über den Einspruch: **22.09.1993**
(45) Hinweis auf die Patenterteilung: 11.11.1987
(21) Anmeldenummer: 84105551.0
(22) Anmeldetag: 16.05.1984
(51) Int. Cl.: B23B 31/28, B23Q 3/157, G05B 19/18

(54) **Werkzeug oder Werkzeughalter, insbesondere für die zerspanende Bearbeitung auf numerisch gesteuerten Bearbeitungszentren**
Tool or tool holder
Outil ou raccordement d'outil

(30) Priorität: 23.07.1983 DE 3326615
(43) Veröffentlichungstag der Anmeldung: 13.02.1985
(73) Patentinhaber: Otto Bilz, Werkzeugfabrik, 73760 Ostfildern (DE)
(72) Erfinder: Bilz, Reiner, Dipl.-Ing., D-7300 Esslingen (DE)
(74) Vertreter: Kratzsch, Volkhard, Dipl.-Ing.

(56) Entgegenhaltungen:
- DE-A- 1 652 694
- DE-A- 2 153 081
- DE-A- 2 447 441
- DE-A- 2 838 959
- DE-A- 3 012 491
- DE-A- 3 131 823
- DE-C- 3 242 551
- US-A- 3 438 489
- US-A- 3 637 994
- US-A- 3 929 827
- M. WECK "Werkzeugmaschinen", Band 3, Automatisierung und Steuerungstechnik, 1978, VDI-VERLAG GMBH, Düsseldorf, Seiten 119-125
- SIEMENS BAUTEILE REPORT, 16. Jahrgang, Heft 6, Dezember 1978, München, E. GELDER "Mikrocomputer-Subsysteme von AMC", Seiten 205-208
- "Werkzeughandhabung im Automatisierungsprozess"- AWF Rationalisierungskongress Fertigungsautomatisierung im Kongress-Zentrum Böblingen vom 4. bis 6. Mai 1981, Verfasser und Referent: Artur Holtschmidt
- Siemens "Bauelemente" Technische Erläuterungen und Kenndaten für Studierende, 2. Auflage, 1977, Seiten 258,259, 332 bis 345,634 und 642
- VDI-Z-120 (1978), Nr.5- März (I), Seiten 190 bis 199 "Einsatzmöglichkeiten von Mikroprozessen in den Planungsphasen der industriellen Produktion"
- VDI-Z-1982, Nr. 10, Seite 364
- VDI-Z-1981, Nr. 6, Seiten 231,232
- Electronics vom 30.06.1982, Seite 130
- Electronics vom 24.02.1982, Seiten 54,55
- Electronics vom 10.02.1982, Seite 121

## Beschreibung

Die Erfindung bezieht sich auf einen Werkzeughalter, insbesondere für die zerspanende Bearbeitung auf numerisch gesteuerten Bearbeitungszentren, versehen mit einem Datenträger für verschiedene werkzeugspezifische Kenndaten wie Länge. Durchmesser, Standzeit Od. dgl. Parameter.

Bei NC-gesteuerten, automatischen Bearbeitungszentren werden die werkzeugspezifischen Kenndaten des Werkzeuges mit Werkzeughalter in bekannter Weise z. B. in Form einer Strichkodierung auf Aufklebeetiketten erstellt, die auf dem Werkzeughalter aufgeklebt werden. Zur Übernahme der kodierten Daten in die Steuerung des Bearbeitungszentrums wird die Strichkodierung mit einem optischen Laser abgetastet, der die Daten der Steuerung zuführt. Diese Art der Datenträger und Datenverarbeitung birgt Nachteile in sich. Zum einen sind die notwendigen optischen Laser sehr empfindlich, nicht nur gegen mechanische Belastung, sondern auch bezüglich Verschmutzung. Ferner besteht die Gefahr, daß das Aufklebeetikett verschmutzt oder sich ablöst, was insbesondere unter der Einwirkung von Öl begünstigt wird, das ja bei Werkzeugen auf jeden Fall vorhanden ist. Von Nachteil ist ferner die sehr begrenzte Speicherkapazität derartiger mit Strichkodierung versehener Aufklebeetiketten, denn die Strichtkodierung kann nicht beliebig lang sein. Außerdem ist von Nachteil, daß man bei verschlissenem Werkzeug dem die Strichkodierung tragenden Etikett nicht ansieht, ob es sich dabei nun um ein gerade neu eingestelltes, von der Meßstation kommendes Werkzeug handelt oder aber ein aus der Bearbeitungsspindel antnommenes, benutztes Werkzeug. Aus Sicherheitsgründen muß man daher bei jedem Werkzeughalter dann, wenn er nach dem Bearbeitungsgang aus der Maschinenspindel entnommen worden ist, das Aufklebeetikett mit Strichkodierung ablösen und ein neues Etikett mit aktuellen Daten in Form der Strichkodierung aufkleben. Diese Manipulationen sind aufwendig. Außer dem verschmiert der Werkzeughalter durch verbleibende Klebeschichten.

Bekannt sind Werkzeuge (DE-A-1 652 694), die am Schaft nahe des Kopfes mit Kodierungsringen versehen sind, die alle den gleichen Durchmesser haben und flach aufeinanderliegen, so daß sich eine durchgängige äußere Zylinderfläche ergibt. Von den Kodierungsringen sind einige elektrisch leitend und die übrigen elektrisch nicht leitend, die z. B. einander abwechsein können. Eine Gruppe der Kodierungsringe kann dabei die Werkzeuggruppe kennzeichnen, während die andere Gruppe der Kodierungsringe z. B. die Werkzeugnummer kennzeichnen kann. Die Auswahl des jeweiligen Werkzeuges aus dem Magazin folgt in der Weise, daß die Werkzeuge mit dem Magazin an entsprechend angeordneten Gleitschuhen vorbeibewegt werden, die unter elektrischer Spannung stehen, wobei der Kodierung entsprechend Signale an eine Steuerung abgegeben werden. Ersichtlich sind derartige Kodierungsringe aufwendig, zumal sie den Querschnitt des Werkzeugschaftes schwächen, insbesondere bei Werkzeuge mit kurzen Schäften, bei denen nur eine geringe Anzahl von Kodierringen angebracht werden kann, sind die Kodiermöglichkeiten gering. Schon deswegen wird den eingangs erläuterten Aufklebeetiketten mit Strichkodierung im allgemeinen der Vorzug gegeben.

Es ist ein Werkzeughalter bekannt ("Werkzeughendhabung im Automatisierungsprozeß" - AWF Rationalisierungskongreß Fertigungsautomatisierung im Kongreß - Zentrum Böblingen vom 4.-6.Mai 1981, Verfasser und Referent: Artur Holtschmidt), der zur Werkzeugkodierung mit einer Identschaltung versehen ist, die aus einer kleinen hochintegrierten Schaltung besteht, die in einen Steilkegel eingebaut ist. Die Schaltung besitzt keins eigene Stromquelle. Bringt man die Schaltung in die Nähe einer Induktionsschleife, dann werden auf drahtlosem Wege dieser Schaltung einige Milli-Amperechen zugeführt. Die Schaltung wird aktiv und sendet dann ein unverwechselbares Impulstelegramm, des zweimal gesendet und von einer Empfangsstation auf Vollständigkeit und Gleichheit überprüft wird. Die Empfangstation ist mit einer Computer-Schnittstelle ausgerüstet. Die Information kann so direkt an den Steuerungscomputer und/oder an eine zentrale elektronische Datenverarbeintungsenlage weitergeleitet werden. Die Informationsübertragung ist wegen der drahtlosen Übertragung der Sendeenergie auf max. 10 mm beschränkt. Mit Hilfe der Identschaltung soll jedes einzalne Werkzeug unverwechselbar identifizierbar sein. Die Identschaltung ist in einer Bohrung des Steilkegels enthalten. Nachteilig ist bei diesem Werkzeughalter, daß bei aktivierter Identschaltung das Werkzeug durch das gesendete Impulstelegramm lediglich identifiziert werden kann. Eine Änderung dieser Identifikation in Anpassung an sich ändernde Gegebenheiten ist nicht möglich.

In "ELECTRONICS" - 10, Februar 1982, S. 121, ist angegeben, daß es EEPROM-Speicher gibt und mit dieser Technologie u.a. elektronische Schlüssel, Kreditkarten, programmierbare Instrumente, Gas-und Elektrizitätszähler versehen werden können.

Der Erfindung liegt die Aufgabe zugrunde, einen Werkzeughalter zu schaffen, bei dem die genannten Nachteile bekannter Datenträger in Form strichkodierter Aufklebeetiketten vermieden sind.

Die Aufgabe ist bei einem Werkzeughalter der im Oberbegriff des Anspruchs 1 genannten Art erfindungsgemäß durch die Merkmale im Kennzeichnungsteil des Anspruchs 1 gelöst. Die Vorteile der erfindungsgemäßen Ausbildung sind folgende. Auf dem Speicher lassen sich sämtliche Parameter und sonstigen werkzeugspezifischen Daten, die erforderlich sind, speichern. Der Speicher hat eine große Speicherkapazität z. B. von 32 x 32 bits, die das Mehrfache der Speicherkapazität z. B. von Aufklebezetteln hat, die - wie z. B. bei Lebensmitteln und sonstigen Gütern des Bedarfs bereits bekannt - mit Strichkodierung versehen sind. Der Speichergewährleistet einen Datenerhalt für mindestens 10 Jahre, ermöglicht einen Datenwechsel in der Größenordnung von mindestens 10.000 Speicher/Löschzyklen, ist unempfindlich auch gegen Magnetfelder und ist temperaturbeständig z. B. bis 125°C. Da der Speicher fester, unlösbarer Bestandteil des Werkzeughalters ist, besteht nicht die Gefahr, daß sich dieser Datenträger versehentlich vom Werkzeughalter ablöst und dann die zum Werkzeughalter gehörenden Daten verlorengehen oder Verwechslungen passieren. Von Vorteil ist ferner, daß der Speicher auch sonst gegen Beschädigung oder Verschmutzung geschützt ist. Durch die Ausbildung als elektrisch löschbarer, programmierbarer Speicher ist er bei Bedarf ohne irgendeine Manipulation oder Demontagenotwendigkeit jederzeit überschreibbar, d.h. er wird zunächst gelöscht und sodann mit neuen Daten wieder gesetzt. Ein weiterer Vorteil liegt darin, daß damit die Möglichkeit eröffnet ist, die abgespeicherten Daten vollständig oder teilweise im Speicher, z. B. selbsttätig dann zu löschen, wenn die Baueinheit aus Werkzeughalter und Werkzeug in der Bearbeitungsspindel eingebracht war und in Betrieb gewesen ist und hiernach der Werkzeugwechsel geschieht. Dann nämlich würde bei versehentlicher erneuter Eingabe der Baueinheit in das Werkzeugmagazin mit der Gefahr, daß dieses Werkzeug maschinenseitig erneut eingesetzt wird, ohne nach Durchlauf bestimmter Standzeit neu vermessen und eingestellt zu werden, die Baueinheit bei Abfrage des Speichers erst gar nicht vom Werkzeugwechsler, der das Magazin bestückt, angenommen werden. Mithin wird die Baueinheit gleich als solche ausgesondert, die neu dem Meßplatz zuzuführen ist, wo der Speicher neu mit den neuen Daten, insbesondere Korrekturdaten wegen des Werkzeuges gesetzt wird. Da der Speicher ohne eigene Spannungsversorgung sich selbst hält, besteht im übrigen nicht die Gefahr, daß eingespeicherte, werkzeugspezifische Daten gerade von diesem Werkzeughalter mit eingesetztem Werkzeug sich separieren und dann verlorengehen. Vorteilhaft ist insbesondere auch, daß die Erfindung einen Diektanschluß des Meßplatzes an die Steuerung des Bearbeitungszentrums, der einen großen Aufwand bedeutet, entbehrlich macht.

Weitere vorteilhafte Ausgestaltungen enthalten die Ansprüche 2-11.

Es ist ein Kontaktbaustein zum Prüfen elektrischer Leiterplatten bekannt (DE-A-3 012 491 ), der einen in einer rohrförmigen Hülse längs geführten Kontaktkolben aufweist, an dessen Stirnfläche eine vorgespannte Schraubenfeder anliegt, die sich in der Hülse abstützt. Der Kontaktkolben ist durch eine zusätzliche, quer zu seiner Achsrichtung wirkende Kraft so an die Innenseite der Hülse angedrückt, daß sich zwischen Hülse und Kontaktkolben unter Umgehung der Schraubenfeder ein direkter guter Berührungskontaktfürdie Stromleitung ergibt. Die Querkraftwird entweder durch exzentrischen Angriff der Schraubenfeder am Kontaktkolben oder durch schräge Anlagefläche am Kontaktkolben oder durch eine seitlich des Kontaktkolbens zwischen diesem und der Hülse angreifende Biegefeder oder dadurch erreicht, daß seitlich zwischen der Hülse und dem Kontaktkolben ein Kanal vorhanden ist, der an eine Druckluftleitung angeschlossen ist, wobei die Druckluft den Kontaktkolben quer zur Achsrichtung beaufschlagt und gegen die Hülse drückt und am vorderen Ende aus der Hülse zur Leiterplatte hin austritt.

Die Erfindung ist nachfolgend anhand der Zeichnung näher erläutert. Es zeigen :

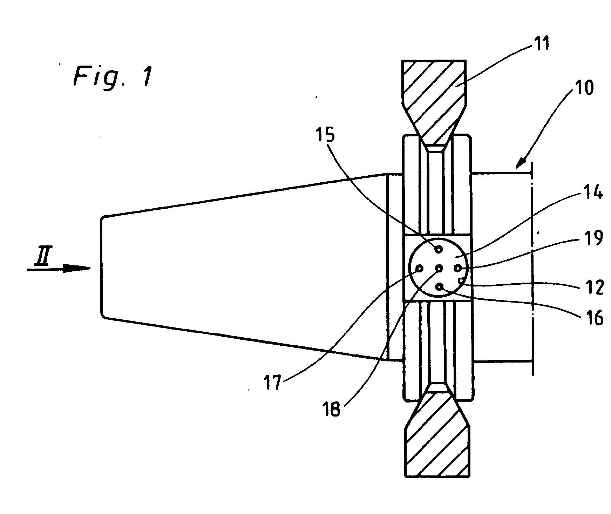

Fig. 1 eine schematische, zum Teil geschnittene Seitenansicht eines Teiles eines Werkzeughalters und eines dieses fassenden Greifers,
Fig. 2 eine Ansicht des Werkzeughalters in Pfeilrichtung II in Fig. 1,
Fig. 3 eine schematische Seitenansicht allein des Speichers mit Trägerplatte, in vergrößertem Maßstab,
Fig. 4 eine Ansicht auf die Unterseite des Speichers mit Trägerplatte,
Fig. 5 eine Draufsicht auf den die Sacklochbohrung enthaltenden Teil des Werkzeughalters,
Fig. 6 einen schematischen axialen Längsschnitt eines Teiles des Kontaktsteckers in Fig. 2,
Fig. 7 eine Stirnansicht des Kontaktsteckers in Pfeilrichtung VII in Fig. 6.

Der schematisch angedeutete Werkzeughalter 10 besteht z. B. aus einem Futter für Gewindebohrer oder sonstige Bohrer und ist insbesondere für den Einsatz zur zerspanenden Bearbeitung auf numerisch gesteuerten, automatischen Bearbeitungszentren gedacht.

Der Werkzeughalter 10 weist in dem Bereich, wo genormte Flächen zum Angriff eines Greifers 11 vorhanden sind, der den automatischen Werkzeugwechsel z. B. vom Werkzeugmagazin in die Spindel und zurück bewirkt, eine diametrale Sacklochbohrung 12 auf.

Der Werkzeughalter 10 ist mit einem Datenträger versehen für verschiedene werkzeugspezifische Kenndaten der aus Werkzeughalter 10 und eingebrachtem Werkzeug bestehenden Baueinheit, wie z. B. Länge, Durchmesser im Schneidbereich des Werkzeuges, Standzeit u. dgl. weitere besondere Parameter. Dieser Datenträger besteht in besonderer Gestaltung aus einem fest eingebauten elektrisch löschbaren, programmierbaren Speicher 13, bezeichnet auch als sogenannter EEPROM. Der Speicher 13 ist auf einer Seite einer Leiterplatine 14 angelötet, und zwar auf derjenigen Seite, die zum Grund der Sacklochbohrung 12 hinweist. Auf der anderen, außen zugänglichen Außenseite der Leiterplatine 14 befinden sich mehrere, beim gezeigten Ausführungsbeispiel insgesamt fünf, gegeneinander isolierte und mit dem Speicher 13 leitend verbundene Kontakte 15 bis 19, die hier als Kontaktflächen ausgebildet sind.

Bei einem anderen, nicht gezeigten Ausführungsbeispiel ist jeder einzelne Kontakt als Kontaktring ausgebildet, wobei die einzelnen Kontaktringe konzentrisch zueinander angeordnet sind.

Der Speicher 13 befindet sich geschützt innerhalb der Sacklochbohrung 12, in der er außerdem z. B. mittels Kunststoff eingegossen sein kann. Die Kontakte 15 und 16 dienen z. B. zum Anschluß an eine Spannungsversorgung, während die übrigen Kontakte 17 bis 19 zum Abfragen, Löschen oder Setzen des Speichers 13 bestimmt sind.

Der Speicher 13 hat keine eigene Stromversorgung, der er nicht bedarf. Er ist so beschaffen, daß er auch ohne Stromversorgung sich selbst hält.

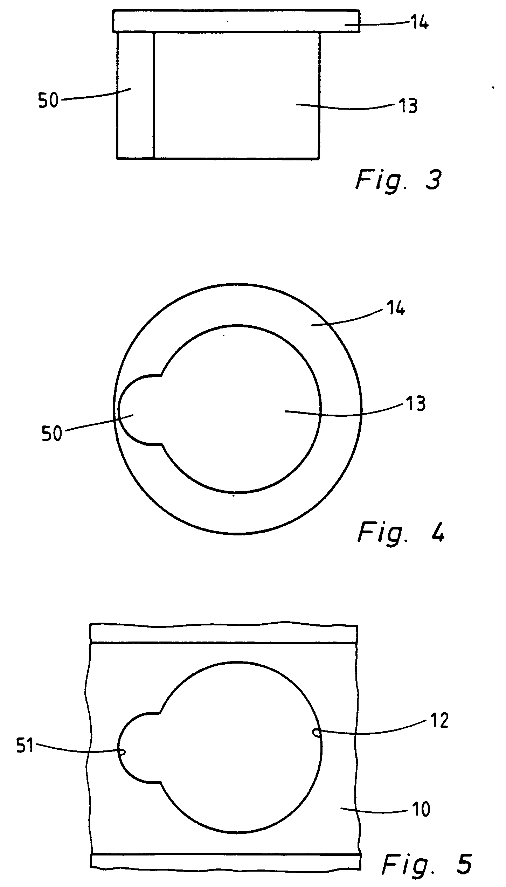

Wie insbesondere aus Fig. 3-5 ersichtlich ist, ist der Speicher 13 innerhalb der Sacklochbohrung 12 in fest vorgegebener, reproduzierbarer Relativdrehstellung gehalten. Dies ist dadurch erreicht, daß der Speicher 13 einerseits und die Sacklochbohrung 12 andererseits einander zugeordnete,unter Vorgabe der Relativdrehstellung formschlüssig ineinandergreifende Verdrehsicherungsteile in Form zumindest eines radialen Vorsprunges 50 einerseits und einer den Vorsprung 50 aufnehmenden Nut 51 andererseits aufweisen. Der Vorsprung 50 ist am Speicher 13 fest angebracht, insbesondere daran angegossen. Er erstreckt sich radial etwa wie eine Nase und verläuft in Axialrichtung beispielsweise über die gesamte Länge des Speichers 13. Die Nut 51 verläuft achsparallel innerhalb der Wandung der Sacklochbohrung 12. Dadurch ist sichergestellt, daß beim Einbringen des Speichers 13 mit Leiterplatine 14 in die Sacklochbohrung 12 eine fest vorgegebene relative Einbaulage reproduzierbar gewährleistet ist.

Nachfolgend ist am Beispiel eines automatischen, numerisch gesteuerten Bearbeitungszentrums die Handhabung der aus Werkzeughalter 10 mit eingesetztem Werkzeug bestehenden Baueinheit erläutert.

Bevor diese Baueinheit in ein Werkzeugmagazin des Bearbeitungszentrums eingegeben wird, dort auf vorgegebenem Platz, wird die Baueinheit zunächst an einem Meßplatz vermessen.

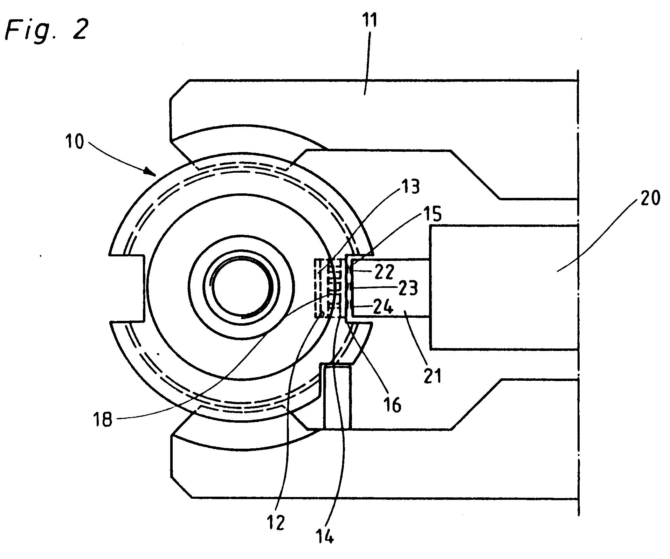

Dieser Meßplatz weist z. B. einen mittels eines nicht weiter gezeigten Hubmagneten koaxial zur Sacklochbohrung 12 und zum Speicher 13 verschiebbaren Stempel 20 auf, der am in Fig. 2 vorderen Ende einen Kontaktstecker 21 aufweist, welcher einzelne dünne Kontaktstifte 22 bis 26 trägt, von denen in Fig. 2 nur die Enden dreier Kontaktstifte 22, 23 und 24 zu sehen sind, dort den Kontakten 15, 18 und 16 zugeordnet. Die Kontaktstifte 22-26 sind im Durchmesser vorteilhaft sehr klein und bestehen jeweils aus zwei teleskopartig gegen Federkraft ineinander schiebbaren Teilen 27-36, von denen der am weistesten nach vorn vorstehende Teil 27-31 am stirnseitigen Ende zumindest einen axial vorstehenden Zahn mit einer vorzugsweise ausmittigen oder in der Mitte befindlichen Spitze 37-41 hat, um Verschmutzungen beim Antasten zu durchbrechen und einen guten elektrischen Kontakt zu bewirken.

Bei einem anderen, nicht gezeigten Ausführungsbeispiel weisen die am weitesten nach vorn vorstehenden Teile 27-31 am stirnseitigen Ende mehrere axial vorstehende Zähne auf, die etwa wie Kronen plaziert sind.

Der am weitesten nach vorn vorstehende Teil 27-31 jedes Kontaktstiftes 22-26 ist mit dem hinteren Teil 32-36 getrieblich so gekoppelt, daß gleichzeitig mit dem teleskopartigen Einschieben des vorderen Teiles 27-31 dieser relativ zum hinteren Teil 32-36 um die Achse des Kontaktstiftes 22-26 drehbetätigbar ist. Es erfolgt also beim Einschieben eine dem überlagerte Drehung um die Kontaktstiftachse, so daß die Spitze 37-41 eine entsprechende Bewegung auf der Oberfläche des Kontaktes 15-19 vollführt. Dadurch werden evtl. Schmutz- oder Korrosionsschichten auf der Oberseite der Kontakte 15-19 durchbrochen und aufgerissen. Somit ist auch auf Dauer immer ein guter elektrischer Kontakt bei der Kontaktierung gewährleistet. Da die Spitzen 37-41 außerhalb der Kontaktstiftachse angeordnet sind, bewirkt eine Drehung des vorderen Teiles 27-31, daß die Spitze 37-41 in Umfangsrichtung wandert.

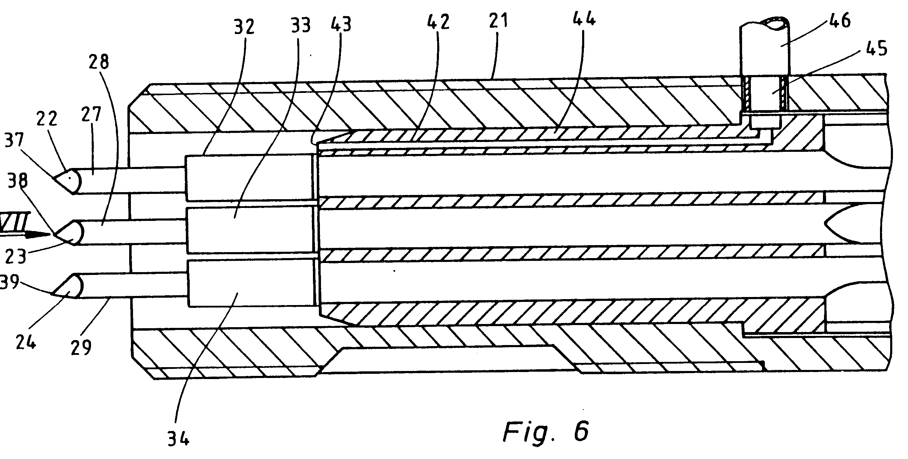

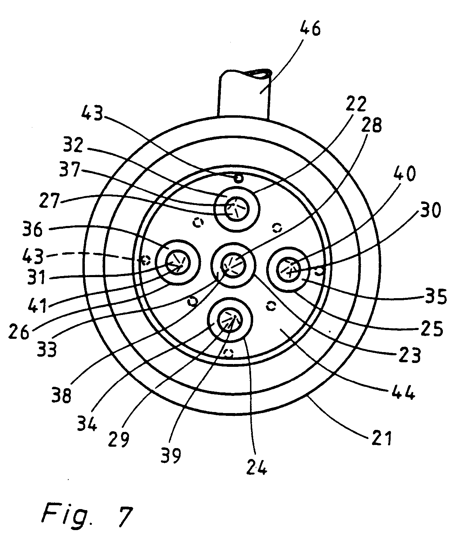

Wie vor allem aus Fig. 6 und 7 ersichtlich ist, weist der Kontaktstecker 21 zumindest einen beim gezeigten Ausführungsbeispiel innen angeordneten Kanal 42 mit stirnseitiger Ausblasöffnung 43 auf, durch den ein Druckgas-Reinigungsstrahl, insbesondere ein Druckluftstrahl, hindurch nach vorn austreten kann. Der Kanal 42 verläuft innerhalb eines Isoliereinsatzes 44 des Kontaktsteckers 21 und steht mit einer z. B. radialen Druckgaszuführung 45 in Verbindung, an die ein Rohr oder Schlauch 46 anschließbar ist. Nicht weiter gezeigt ist z. B. ein den Druckgasfluß steuerndes Ventil, das beispielsweise gleichzeitig mit dem Einschieben des jeweils vorderen Teils 27-31 in den hinteren Teil 32-36 der Kontaktstifte 22-26 im Sinne einer Freigabe des Gasstromes angesteuert wird. Diese Ansteuerung kann auch von Hand und unabhängig vom Einschieben der jeweils vorderen Teil 27-31 erfolgen. Wird der Druckgasstrahl, z. B. Druckluftstrahl, durch den Kanal 42 geleitet, so tritt er über die Ausblasöffnung 43 in Richtung auf die die Kontakte 15-19 tragende Oberfläche aus und reinigt diese Oberfläche durch Druck von Staub oder dergleichen Anlagerungen.

In Fig. 7 ist gestrichelt angedeutet, daß auch mehrere Kanäle entsprechend dem Kanal 42 an passender Stelle im Isoliereinsatz 44 angeordnet sein können.

Wird der Stempel 20 mit dem Kontaktstecker 21 und seinen Kontaktstiften 22-26 in Fig.2-6 nach links hin auf die außen zugängliche Seite der Leiterplatine 14 bewegt, so drücken die einzelnen Kontaktstifte 22-26, jeder für sich, auf den jeweils zugeordneten Kontakt 15 bis 19, so daß die Kontaktierung besorgt ist. Über die Kontakte 15 und 16 wird der Speicher 13 an Spannung gelegt. Beim Vermessen der Baueinheit aus Werkzeughalter und Werkzeug können nun nicht nur die Werkzeugkenndaten selbst sondern auch z. B. wegen Verschleißes des Werkzeuges nötige Korrekturdaten durch Setzen des Speichers 13 in den Speichers 13 eingegeben werden.

Hiernach wird die Baueinheit aus Werkzeughalter 10 und eingesetztem Werkzeug mit gesetztem Speicher 13, derfester Bestandteil des Werkzeughalters ist, dem Werkzeugmagazin des NC-Bearbeitungszentrums zugeführt. Beim Einsetzen dieser Baueinheit an den entsprechenden Platz des Werkzeugmagazins werden dann die im Speicher 13 gespeicherten einzelnen Daten in gleicher Weise über einen Stempel 20 mit Kontaktstecker 21 und Kontaktstiften 22-26 abgefragt und direkt in die Steuerung der Maschine übergeben. Das Einsetzen der Baueinheit in das Werkzeugmagazin kann von Hand geschehen oder z. B. unter Nutzung der automatischen Werkzeugwechseleinrichtung der Maschine, die einen im Bereich des Vertikalschlittens sitzenden Greifer hat, der mit einem Greiferende an die Bearbeitungsspindel greift und mit seinem anderen Greiferende das in Werkzeugwechselposition des Werkzeugmagazins befindliche neue Werkzeug ergreift. Zum Plazieren der Baueinheit im Werkzeugmagazin wird diese Baueinheit mit dem Werkzeughalter 10 z. B. in die Bearbeitungsspindel eingesteckt und dann ausgehend davon der Werkzeugwechsel eingeleitet über den Greifer. Bei diesem Vorgang kann über einen direkt am Greifer 11 sitzenden Stempel 20 mit Kontaktstecker 21 Kontaktstiften 22 bis 26 während des Wechsels die Abfragung der im Speicher 13 eingespeicherten, werkzeugspezifischen Daten erfolgen und zugleich die Übergabe und Einspeicherung in die Steuerung des NC-gesteuerten Bearbeitungszentrums.

## Patentansprüche

1. Werkzeughalter, insbesondere für die zerspanende Bearbeitung auf numerisch gesteuerten Bearbeitungszentren, versehen mit einem Datenträger für verschiedene werkzeugspezifische Kenndaten, wie Länge, Durchmesser, Standzeit od.dgl. Parameter, dadurch gekennzeichnet, daß der Datenträger aus einem fest eingebauten, elektrisch löschbaren und programmierbaren Speicher (13) (sogenannter EEPROM) gebildet ist, der in einer Sacklochbohrung (12) in fest vorgegebener, reproduzierbarer Relativdrehstellung aufgenommen und verliersicher befestigt ist, daß der Speicher (13) auf einer Seite einer Trägerplatte, insbesondere einer Leiterplatine (14), die auf ihrer anderen Seite mehrere, gegeneinander isolierte und mit dem Speicher (13) elektrisch leitend verbundene Kontakte (15 bis 19) aufweist, und dabei auf der Seite der Trägerplatte (14) angelötet ist, die dem Grund der Sacklochbohrung (12) zugewandt ist, daß die Kontakte (15 bis 19) auf der außen zugänglichen Außenseite der Trägerplatte (14) angeordnetsind, und daß der Speicher (13) mitsamt der Trägerplatte (14) innerhalb der Sacklochbohrung (12) vergossen ist.

2. Werkzeughalter nach Anspruch 1, dadurch gekennzeichnet, daß der Speicher (13) in einer diametralen Sacklochbohrung (12) enthalten ist.

3. Werkzeughalter nach Anspruch 1, dadurch gekennzeichnet, daß die einzelnen Kontakte (15 bis 19) aus Kontaktpunkten bestehen.

4. Werkzeughalter nach Anspruch 1, dadurch gekennzeichnet, daß die einzelnen Kontakte jeweils als Kontaktringe ausgebildet sind, die konzentrisch zueinander angeordnet sind.

5. Werkzeughalter nach einem der Ansprüche 1 bis 4, dadurch gekennzeichnet, daß der Speicher (13) einerseits und die Sacklochbohrung (12) andererseits einander zugeordnete, unter Vorgabe der Relativdrehstellung formschlüssig ineinandergreifende Verdrehsicherungsteile, insbesondere zumindest einen radialen Vorsprung (50) einerseits und eine den Vorsprung (50) aufnehmende Nut (51) andererseits, aufweisen.

6. Werkzeughalter nach Anspruch 5, dadurch gekennzeichnet, daß der Vorsprung (50) am Speicher (13) gehalten, insbesondere daran angegossen, ist und daß die den Vorsprung (50) aufnehmende Nut (51) achsparallel innerhalb der Wandung der Sacklochbohrung (12) verläuft.

7. Werkzeughalter nach einem der Ansprüche 1 bis 6, mit zugeordnetem Kontaktstecker, dadurch gekennzeichnet, daß der Kontaktstecker (21) entsprechend der Kontakten (15 bis 19) auf der Trägerplatte (14) gruppierte, einzelne Kontaktstifte (22 bis 26) aufweist, die jeweils mindestens zwei teleskopartig gegen Federkraft ineinander schiebbare Teile (27 bis 36) aufweisen, von denen der am weitesten vorn vorstehende Teil (27 bis 31) am stirnseitigen Ende zumindest einen axial vorstehenden Zahn (37 bis 41) aufweist.

8. Werkzeughalter nach Anspruch 7, dadurch gekennzeichnet, daß der am weitesten nach vorn vorstehende Teil (27 bis 31) jedes Kontaktstiftes (22 bis 26) gleichzeitig mit dem teleskopartigen Einschieben relativ zum nächsten Teil (32 bis 36), oder zusammen mit letzterem um die Kontaktstiftachse selbsttätig drehbetätigbar ist.

9. Werkzeughalter nach Anspruch 7 oder 8, dadurch gekennzeichnet, daß der stirnseitig vorstehende, mindestens eine Zahn (37 bis 41) jedes Kontaktstiftes (22 bis 26) außerhalb der Kontaktstiftachse angeordnet ist.

10. Werkzeughalter nach einem der Ansprüche 7 bis 9, dadurch gekennzeichnet, daß der Kontaktstecker (21) zumindest einen, vorzugsweise inneren, Kanal (42) mit stirnseitiger Ausblasöffnung (43) für einen Druckgas-Reinigungsstrahl aufweist.

11. Werkzeughalter nach Anspruch 10, dadurch gekennzeichnet, daß der mindestens eine Kanal (42) innerhalb des Isoliereinsatzes (44) des Kontaktsteckers (21) verläuft und mit einer Druckgaszuführung (45,46) in Verbindung steht.

## Claims

1. Tool holder, especially for chip-removing machining on numerically controlled machining centres, equipped with a data carrier for various tool- specific characteristic data, such as length, diameter, tool life and similar parameters, characterized in that the data carrier is formed of a permanently installed, electrically erasable and programmable memory (13) (so-called EEPROM), which is seated and secured against loss in a blind bore (12) in a permanently predetermined, reproducible relative rotational position, that the memory (13) is mounted on one side of a support plate, especially a printed circuit plate (14), which possesses on its other side a plurality of mutually insulated contacts (15 to 19), electrically conduct- ingly connected with the memory (13) and is soldered to the side of the support plate (14) which is towards the base of the blind bore (12), that the contacts (15 to 19) are disposed on the externally accessible outer side of the support plate (14), and that the memory (13) together with the support plate (14) is cast inside the blind bore (12).

2. Tool holder according to Claim 1, characterized in that the memory (13) is contained in a diametral blind bore (12).

3. Tool holder according to Claim 1, characterized in that the individual contacts (15 to 19) consist of contact points.

4. Tool holder according to Claim 1, characterized in that the individual contacts are each constructed as contact rings, which are mounted concentrically to one another.

5. Tool holder according to one of Claims 1 to 4, characterized in that the memory (13) on the one hand and the blind bore (12) on the other hand possess mutually associated, rotation-preventing parts, engaging form-fittingly into one another to determine the relative rotational position, especially at least one radial projection (50) on the one hand and one groove (51), seating the projection (50), on the other hand.

6. Tool holder according to Claim 5, characterized in that the projection (50) is secured on the memory (13), especially cast onto it, and that the groove (51) seating the projection (50) extends axis- parallel inside the wall of the blind bore (12).

7. Tool holder according to one of Claims 1 to 6, with associated contact plug, characterized in that the contact plug (21) possesses individual contact pins (22 to 26), grouped in correspondence with the contacts (15 to 19) on the support plate (14), which (contact pins) each possess at least two parts (27 to 36) slidable telescopically into one another against spring force, of which the part (27 to 31) projecting farthest forwards possesses, at its end, at least one axially projecting tooth (37 to 41).

8. Tool holder according to Claim 7, characterized in that the part (27 to 31) projecting farthest forwards of each contact pin (22 to 26) can be automatically rotatably actuated about the contact pin axis simultaneously with the telescopic pushing- in relative to the next part (32 to 36) or together with the latter.

9. Tool holder according to Claim 7 or 8, characterized in that the at least one projecting tooth (37 to 41) of each contact pin (22 to 26) is disposed outside the contact pin axis.

10. Tool holder according to one of Claims 7 to 9, characterized in that the contact plug (21) possesses at least one, preferably inner duct (42) with a blowing-out opening (43) at its end for a compressed gas cleaning jet.

11. Tool holder according to Claim 10, characterized in that the at least one duct (42) extends inside the insulating insert (44) of the contact plug (21) and is in communication with a compressed gas supply (45, 46).

## Revendications

1. Porte-outil, en particulier pour l'usinage par enlèvement de copeaux sur des centres d'usinage à commande numérique, équipé d'un support de données pour différentes données caractéristiques spécifiques de l'outil telles que la longueur, le diamètre, la durée d'utilisation ou des paramètres analogues, caractérisé en ce que le support de données est constitué par une mémoire fixe électriquement effaçable et programmable (13)(dite EEPROM) qui est logée et fixée de manière rigide en torsion dans un alésage (12) dans une position de rotation relative prédéterminée et reproductible, que la mémoire (13) est soudée sur l'une des faces d'une plaque de support, en particulier d'une carte imprimée (14), dont l'autre face comprend plusieurs contacts (15 à 19) isolés les uns par rapport aux autres et reliés électriquement à la mémoire (13), et donc soudée sur la face de la plaque de support (14) qui est dirigée vers le fond du trou borgne (12), que les contacts (15 à 19) sont disposés sur la face extérieure de la plaque de support (14) accessible par l'extérieur, et que la mémoire (13), y compris la plaque de support (14), est scellée à l'intérieur du trou borgne (12).

2. Porte-outil selon la revendication 1, caractérisé en ce que la mémoire (13) est contenue dans un trou borgne diamétral (12).

3. Porte-outil selon la revendication 1, caractérisé en ce que les différents contacts (15 à 19) sont constitués par des points de contact.

4. Porte-outil selon la revendication 1, caractérisé en ce que les différents contacts sont respectivement conformés en bagues de contact disposées concentriquement les unes par rapport aux autres.

5. Porte-outil selon l'une quelconque des revendications 1 à 4, caractérisé en ce que la mémoire (13), d'une part, et le trou borgne (12), d'autre part, présentent des éléments de blocage en rotation associés, en particulier au moins une saillie radiale (50), d'une part, et une encoche (51) recevant ladite saillie (50), d'autre part, qui s'emboîtent l'une dans l'autre avec engagement positif et prédétermination de la position de rotation relative.

6. Porte-outil selon la revendication 5, caractérisé en ce que la saillie (50) est solidarisée avec la mémoire (13), en particulier venue de fonderie avec celle-ci, et que l'encoche (51) recevant la saillie (50) s'étend parallèlement à l'axe à l'intérieur de la paroi du trou borgne (12).

7. Porte-outil selon l'une quelconque des revendications 1 à 6, avec fiche de contact associée, caractérisé en ce que la fiche de contact (21) présente, groupées conformément aux contacts (15 à 19) sur la plaque de support (14), des pointes de contact individuelles (22 à 26) qui se composent respectivement au moins de deux sections (27 à 36) qui s'insèrent de manière télescopique l'une dans l'autre contre la force d'un ressort et dont la section (27 à 31) dépassant le plus vers l'avant présente à son extrémité frontale au moins une dent (37 à 41) en saillie dans le sens axial.

8. Porte-outil selon la revendication 7, caractérisé en ce que, simultanément avec la rentrée télescopique, la section (27 à 31) de chaque pointe de contact (22 à 26) qui dépasse le plus vers l'avant peut être tournée automatiquement par rapport à la section suivante (32 à 36), ou conjointement avec celle-ci, autour de l'axe de la pointe de contact.

9. Porte-outil selon l'une quelconque des revendications 7 ou 8, caractérisé en ce qu'au moins une dent (37 à 41) dépassant de la face frontale de chaque pointe de contact (22 à 26) est disposée à l'extérieur de l'axe de la pointe de contact.

10. Porte-outil selon l'une quelconque des revendications 7 à 9, caractérisé en ce que la fiche de contact (21) comprend au moins un canal (42), de préférence intérieur, avec une bouche de sortie frontale (43) pour un jet de gaz sous pression pour le nettoyage.

11. Porte-outil selon la revendication 10, caractérisé en ce qu'au moins un canal (42) s'étend à l'intérieur de l'insert isolant (44) de la fiche de contact (21) et communique avec une arrivée de gaz sous pression (45,46).
